# FASCICULE DE BREVET EUROPEEN

(11) **EP 3 048 870 B1**
(45) Date de publication et mention de la délivrance du brevet: **18.11.2020**
(21) Numéro de dépôt: 14796183.3
(22) Date de dépôt: 23.09.2014
(51) Int. Cl.: A01B 73/04

(54) **BARRE PORTE-OUTILS AVEC UN DISPOSITIF DE VERROUILLAGE ET MACHINE AGRICOLE COMPORTANT UNE TELLE BARRE PORTE-OUTILS**
WERKZEUGTRAGBALKEN MIT EINER VERRIEGELUNGSVORRICHTUNG UND LANDWIRTSCHAFTLICHE MASCHINE MIT DIESEM WERKZEUGTRAGBALKEN
TOOLBAR WITH A LOCKING DEVICE AND AGRICULTURAL MACHINE COMPRISING A TOOLBAR

(30) Priorité: 25.09.2013 FR 1359224
(43) Date de publication de la demande: 03.08.2016
(73) Titulaire: Kuhn SAS, 67700 Saverne (FR)
(72) Inventeur: VIRIAT, Laurent, 67440 Westhouse-Marmoutier (FR)
(74) Mandataire: Esch, Esther Evelyne
(86) Numéro de dépôt international: PCT/FR2014/052373
(87) Numéro de publication internationale: WO 2015/044577

(56) Documents cités:
- US-A- 3 944 001
- US-A- 4 042 044
- US-A- 4 316 511

## Description

La présente invention se rapporte au domaine technique général du machinisme agricole et notamment à une barre porte-outils pour machines agricoles. L'invention concerne une barre porte-outils pour machine agricole comportant une poutre centrale disposée sensiblement perpendiculairement à la direction d'avance et au moins une poutre latérale s'étendant dans le prolongement de la poutre centrale au travail, un vérin de manœuvre permet de passer la poutre latérale d'une position de travail vers une position de transport et inversement. L'invention concerne également une machine agricole équipée d'une telle barre porte-outils.

Une barre porte-outils de ce type est connue par le document US 3 941 194 A**.** La barre porte-outils est destinée à porter des outils répartis sur sa largeur et comporte une poutre centrale et au moins une poutre latérale. La poutre latérale est mobile en rotation pour passer d'une position relevée à une position abaissée au moyen d'un vérin de manœuvre. Ce dernier est relié à l'une de ses extrémités à la poutre centrale et à l'autre extrémité à la poutre latérale. Le vérin de manœuvre est logé dans la poutre centrale. La position relevée correspond à la position de transport et la position abaissée correspond à la position de travail. La poutre latérale est liée à la poutre centrale au moyen d'une articulation d'axe sensiblement horizontal et dirigé dans la direction d'avance. Dans la position de travail, une broche permet de verrouiller rigidement la poutre latérale par rapport à la poutre centrale. Le verrouillage de la position relevée de la barre porte-outils est réalisé au moyen d'un hauban. Le hauban est lié à l'une de ses extrémités à la poutre centrale et à l'autre de ses extrémités à la poutre latérale. Il présente des sections télescopiques lui permettant de suivre le mouvement de pivotement de la poutre latérale. Le hauban s'étend sensiblement au-dessus de la barre porte-outils dans la position de travail. Le hauban permet d'immobiliser la poutre latérale dans sa position verticale. Le verrouillage du hauban est réalisé au moyen d'une broche qui traverse les sections télescopiques. Lorsque le hauban est verrouillé au transport, il est encombrant puisqu'il s'étend en diagonal entre la poutre centrale et la poutre latérale. Pour pouvoir passer d'une position relevée de la barre porte-outils à une position abaissée, et inversement, l'opérateur doit descendre au moins deux fois du tracteur.

Le document US 4 042 044 divulgue une barre d'outils comportant une poutre centrale, deux poutres latérales et deux vérins de manœuvre. Un dispositif de verrouillage pourvu d'un verrou et d'un actionneur sert à verrouiller la poutre latérale par rapport à la poutre centrale au transport et au travail.

Le document US 4 316 511 divulgue une barre d'outils comportant une poutre centrale, deux poutres latérales, deux vérins de manœuvre et deux verrous. Le vérin de manœuvre a pour rôle additionnel de faire basculer l'un ou l'autre des verrous vers une position de blocage respective correspondant à la position de transport ou à la position de travail.

La présente invention a pour but de remédier aux inconvénients précités. Elle doit notamment proposer une barre porte-outils dont le verrouillage est sécurisé et ergonomique. L'invention a aussi pour but de fournir un dispositif de verrouillage compact.

A cet effet, une importante caractéristique de l'invention consiste en ce que la poutre latérale est verrouillée au travail et au transport au moyen d'un dispositif de verrouillage comportant un verrou et un actionneur et que l'actionneur s'étend dans le volume de la barre porte-outils. Grâce à cette caractéristique, le verrouillage de la barre porte-outils se fait de manière plus sûre pour l'opérateur puisqu'il est effectué depuis la cabine du tracteur. L'utilisation du même dispositif de verrouillage pour maintenir la barre porte-outils dans sa position de travail et dans sa position de transport réduit le nombre de composant et facilite la commande de l'actionneur.

Selon une autre caractéristique de l'invention, le dispositif de verrouillage est proche de la première articulation. Cette proximité a pour avantage de pouvoir proposer un dispositif de verrouillage compact.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue de dessus d'une barre porte-outils selon l'invention en position de travail,
- la **figure 2** représente une vue isométrique d'une partie de la barre porte-outils de la figure 1,
- la **figure 3** représente une vue arrière de la barre porte-outils complète en position de transport,
- les **figures 4** à **8** représentent des vues de détail arrière de la barre porte-outils dans différentes positions de la poutre latérale et du dispositif de verrouillage selon l'invention.

La barre porte-outils (1) selon l'invention est destinée à être accouplée à un tracteur servant à l'animer et à la déplacer dans la direction (A). La barre porte-outils (1) se compose d'une poutre centrale (3) qui s'étend sensiblement perpendiculairement à la direction (A) et d'une poutre latérale (4). Au travail, la poutre latérale (4) s'étend dans le prolongement de la poutre centrale (3) pour augmenter la largeur de travail. Avec une grande largeur, la barre porte-outils (1) dépasse la largeur totale autorisée pour circuler sur les routes. La barre porte-outils (1) est donc repliée pour la position de transport afin de respecter le gabarit routier. La poutre latérale (4) est ainsi transposée d'une position de travail vers une position de transport pour réduire la largeur de la barre porte-outils (1). Pour encore augmenter la largeur de travail de la barre porte-outils (1), il est courant d'adapter une poutre latérale (4) de part et d'autre de la poutre centrale (3). La barre porte-outils (1) se compose ainsi d'une poutre centrale (3) et d'au moins une poutre latérale (4).

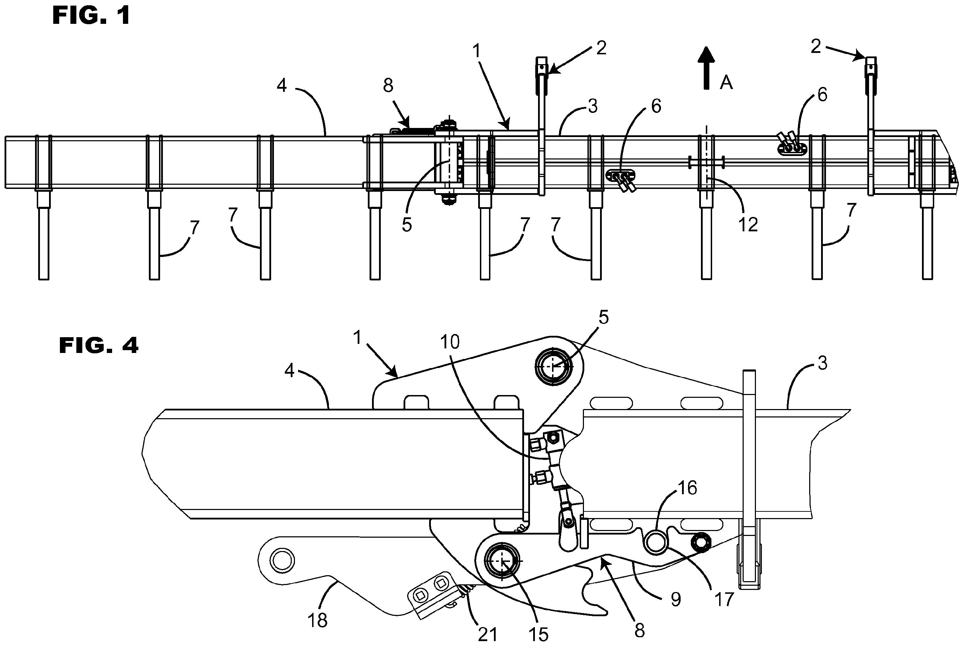

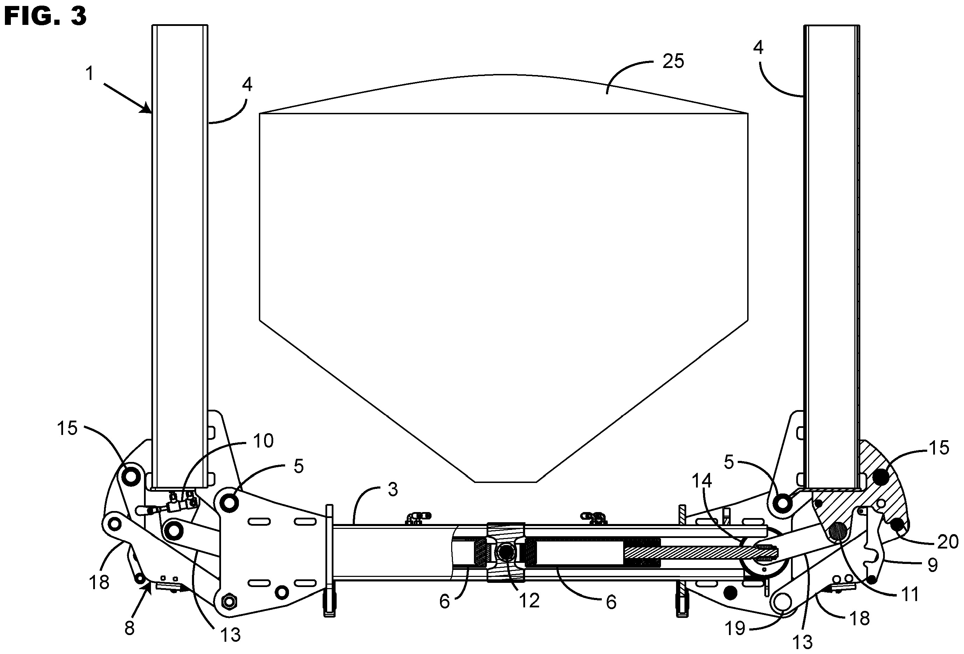

Dans l'exemple de réalisation qui est décrit ci-dessous, la barre porte-outils (1) présente une poutre centrale (3) et deux poutres latérales (4). Sur la figure 1, seule la partie gauche de la barre porte-outils (1) est entièrement représentée pour une meilleure clarté. On comprendra que la partie droite est symétrique et présente les mêmes caractéristiques. La barre porte-outils (1) possède un système d'attelage (2) pour pouvoir être accouplé à un tracteur ou à un châssis d'une machine agricole. Le système d'attelage (2) est disposé sur la poutre centrale (3). La vue de dessus montre que la poutre latérale (4) se situe dans le prolongement de la poutre centrale (3). Les poutres (3 et 4) s'étendent sensiblement perpendiculairement à la direction d'avance (A). La poutre latérale (4) est liée à la poutre centrale (3) au moyen d'une première articulation (5). Un vérin de manœuvre (6) permet de passer la poutre latérale (4) d'une position de travail vers une position de transport, et inversement. Selon la figure 3, chaque poutre latérale (4) est commandée par un vérin de manœuvre (6) respectif. Selon une alternative, les poutres latérales (4) sont commandées par un seul vérin de manœuvre. La barre porte-outils (1) supporte des outils (7) qui sont les pièces travaillantes. Les outils (7) sont répartis sur la barre porte-outils (1) à espacement régulier. Les outils (7) sont, par exemple, des dents, des disques ou des socs. Les outils (7) ont pour fonction de travailler la terre ou de créer un sillon à une profondeur déterminée pour y placer les graines. D'après la figure 1, la poutre centrale (3) porte les outils (7) destinés à travailler la bande de terre centrale et les poutres latérales (4) portent les outils (7) destinés à travailler les bandes de terre latérales. La première articulation (5) sépare les outils (7) travaillant la bande centrale de la bande latérale.

Dans une alternative non représentée, la poutre latérale (4) peut être décalée en avant ou en arrière selon la direction (A) par rapport à la poutre centrale (3).

Selon une importante caractéristique de l'invention, la poutre latérale (4) est verrouillée au travail et au transport au moyen d'un dispositif de verrouillage (8) comportant un verrou (9) et un actionneur (10). De cette manière, le verrouillage de la barre porte-outils (1) se fait de manière plus sûre pour l'opérateur puisqu'il est effectué depuis la cabine du tracteur. L'utilisation du même dispositif de verrouillage (8) pour maintenir la barre porte-outils (1) dans sa position de travail et dans sa position de transport réduit le nombre de composant et facilite la commande de l'actionneur (10). D'une manière particulièrement avantageuse, l'actionneur (10) est inscrit dans la barre porte-outils (1). L'actionneur (10) s'étend dans le volume de la barre porte-outils (1). L'actionneur (10) est placé entre la poutre centrale (3) et la poutre latérale (4) ce qui permet de fournir un dispositif de verrouillage (8) compact. Ce dispositif de verrouillage (8) est logé dans un espace réduit ce qui permet de fixer librement les outils (7) sur la barre porte-outils (1). D'après la figure 1, les outils (7) peuvent être montés très proche de la première articulation (5) et du dispositif de verrouillage (8).

Le dispositif de verrouillage (8) est simple. L'actionneur (10) est avantageusement un vérin à double effet. Il comporte un corps à l'intérieur duquel est disposée une tige solidaire d'un piston. Le piston définit deux chambres de pression à l'intérieur du corps. Le piston est mobile en translation selon un axe principal correspondant à l'axe longitudinal du corps. La grande chambre et la petite chambre peuvent être alimentées indépendamment l'une de l'autre par un fluide sous pression via un orifice d'alimentation respectif. Les chambres communiquent avec une centrale hydraulique (non représentée) via un distributeur (non représenté). Le fluide est, par exemple, de l'huile hydraulique ou du gaz. L'intervention sur le dispositif de verrouillage (8) à distance via l'actionneur (10) se fait de manière ergonomique, depuis la cabine du tracteur. En effet, dans le cas d'un actionneur (10) du type vérin hydraulique à double effet, l'opérateur commande l'actionneur (10) par l'intermédiaire du distributeur hydraulique du tracteur ou alors la commande de l'actionneur (10) fait partie d'une séquence enregistrée dans un boîtier électronique.

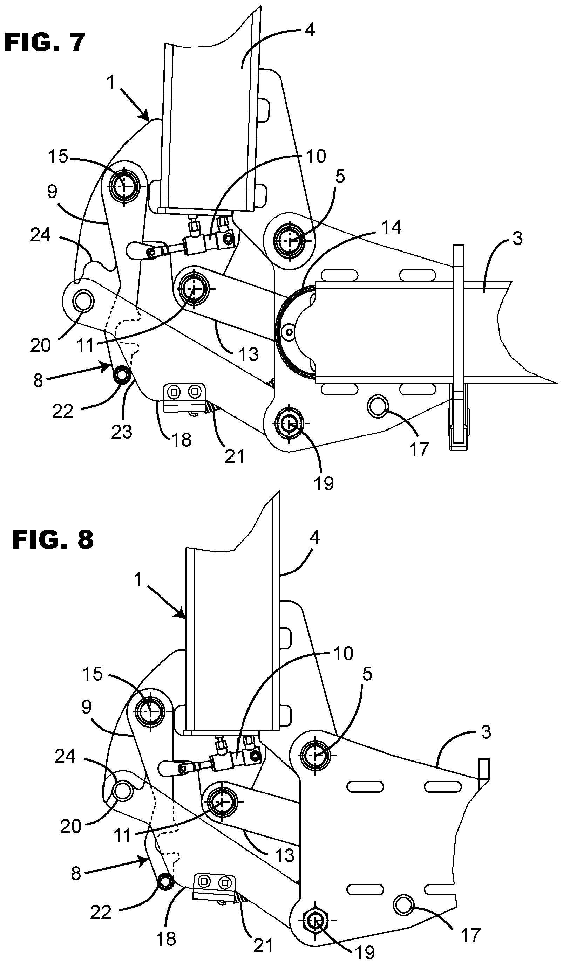

Le passage de la position de travail (figure 4) à la position de transport (figures 3 et 8) et inversement est possible seulement lorsque le verrou (9) est libéré par l'actionneur (10). Ainsi l'opérateur devra toujours commander d'abord l'actionneur (10) avant de pouvoir commander le vérin de manœuvre (6) correspondant. Cette opération préliminaire est une sécurité puisque le vérin de manœuvre (6) ne changera pas d'état si le dispositif de verrouillage (8) n'est pas déverrouillé. Le vérin de manœuvre (6) peut être actionné seulement si le dispositif de verrouillage (8) est libéré par l'actionneur (10).

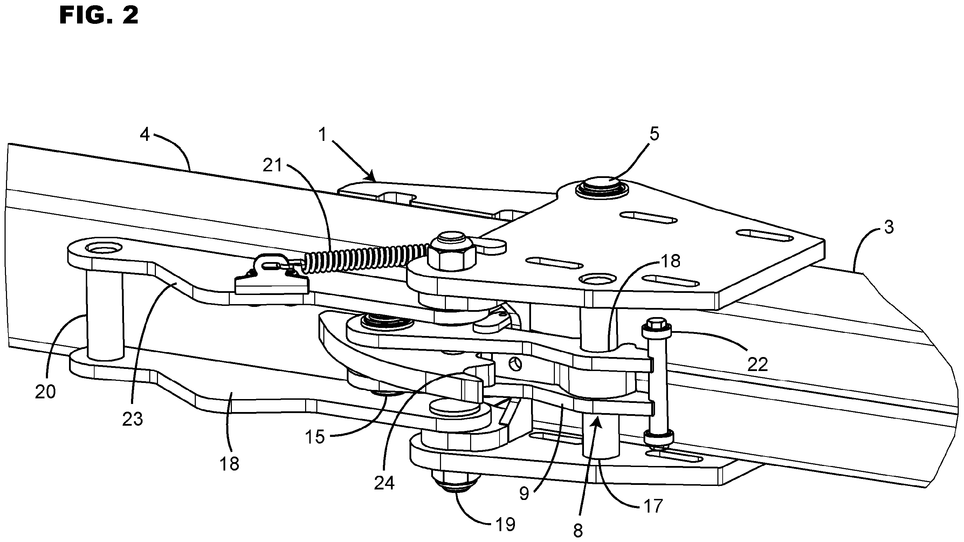

Selon une autre caractéristique importante de l'invention, un dispositif de verrouillage (8) est associé à chaque première articulation (5). On remarque que le dispositif de verrouillage (8) est proche de la première articulation (5). Cette proximité permet de réaliser un dispositif de verrouillage (8) ayant un encombrement réduit. Le dispositif de verrouillage (8) selon l'invention est donc compact. Selon la figure 1, la première articulation (5) s'étend au-dessus de la barre porte-outils (1) et le dispositif de verrouillage (8) correspondant s'étend en dessous de la barre porte-outils (1). Le dispositif de verrouillage (8) s'étend, de préférence, du côté opposé à celui de la première articulation (5). La figure 2 représente une vue isométrique du dispositif de verrouillage (8) dans sa position verrouillée avec la barre porte-outils (1) dans sa position de travail. Grâce à la compacité du dispositif de verrouillage (8), celle-ci conserve une garde au sol importante ce qui est favorable et réduit le risque de colmatage dus à la présence de débris végétaux.

La figure 3 montre la barre porte-outils (1) complète dans sa position relevée de transport. Une poutre latérale (4) est positionnée de chaque côté de la poutre centrale (3). Chaque poutre latérale (4) est liée à la poutre centrale (3) via une articulation (5) respective dont l'axe s'étend dans un plan sensiblement vertical. Le plan vertical est parallèle au plan vertical médian de la barre porte-outils (1). L'axe de la première articulation (5) est, par exemple, sensiblement horizontal dirigé dans la direction d'avance (A). L'axe de la première articulation (5) peut être incliné par rapport à l'horizontal ou même être vertical. Les poutres latérales (4) sont repliables vers le haut pour le transport sur route. Cette position est obtenue à l'aide du vérin de manœuvre (6) correspondant. Chaque vérin de manœuvre (6) est étendu, c'est-à-dire que sa tige est complètement sortie. De ce fait, la poutre latérale (4) pivote d'un angle voisin de 90° pour replier la poutre latérale (4) sensiblement verticalement.

A titre d'exemple, la poutre centrale (3) est avantageusement creuse sur toute sa longueur ce qui permet de placer le vérin de manœuvre (6) dans la poutre centrale (3). En étant intégré à l'intérieur de la poutre centrale (3), le vérin de manœuvre (6) est protégé des agressions extérieures et des chocs. La terre et les débris ne peuvent pas s'accumuler sur le cylindre ou la tige du vérin de manœuvre (6). Dans l'exemple représenté, les deux vérins de manœuvre (6) sont fixés, au niveau de leur cylindre, au centre de la poutre centrale (3) par l'intermédiaire d'un point d'accroché commun (12). La tige est reliée à l'une des poutres latérales (4) au niveau d'une deuxième articulation (11) d'axe sensiblement horizontal. L'axe de la deuxième articulation (11) est parallèle à la première articulation (5). Pour pouvoir s'étendre complètement dans la poutre centrale (3), chaque vérin de manœuvre (6) est associé à un bras de liaison (13). Le bras de liaison (13) est articulé entre la tige du vérin de manœuvre (6) et la deuxième articulation (11).

D'une manière avantageuse, la translation de la tige du vérin de manœuvre (6) est guidée au moyen d'au moins une roue de guidage (14). La poutre centrale (3) présente, à cet effet, une section transversale carrée ou rectangulaire. Les roues de guidage (14) se déplacent dans la poutre centrale (3). L'implantation des vérins de manœuvre (6), à l'intérieur de la poutre centrale (3), laisse une latitude importante de positionnement pour les outils (7) qui sont montés sur la barre porte-outils (1).

Les figures 4 à 8 représentent des vues de détail arrière de la barre porte-outils (1). Certaines pièces ont été déposées pour une meilleure compréhension. Il s'agit de vues de détail au niveau de la première articulation (5) entre la poutre centrale (3) et la poutre latérale (4) gauche. La première articulation (5) est située au-dessus de la poutre centrale (3) et le dispositif de verrouillage (8) est situé au moins partiellement sous la poutre centrale (3). Sur ces figures sont représentées différentes positions de la poutre latérale (4) depuis sa position de travail jusqu'à sa position de transport.

La figure 4 illustre une partie de la barre porte-outils (1) dans sa position de travail verrouillée. Le dispositif de verrouillage (8) immobilise la poutre latérale (4) dans le prolongement de la poutre centrale (3) grâce à l'actionneur (10) qui est rétracté et qui entraîne le verrouillage du verrou (9). Le verrou (9) est solidaire de la poutre latérale (4). Il est lié à la poutre latérale (4) via une troisième articulation (15) d'axe horizontal. L'extrémité libre du verrou (9) présente une encoche (16) destinée à venir en regard d'un arrêt (17) pour bloquer le pivotement de la poutre latérale (4) autour de la première articulation (5). L'actionneur (10) est lié, quant à lui, d'une part à la poutre latérale (4) et d'autre part au verrou (9). De préférence, le corps de l'actionneur (10) est lié à la poutre latérale (4) et la tige est liée au verrou (9). On remarque que l'actionneur (10) s'étend dans l'encombrement de la barre porte-outil (1). L'actionneur (10) s'étend entre la poutre centrale (3) et la poutre latérale (4).

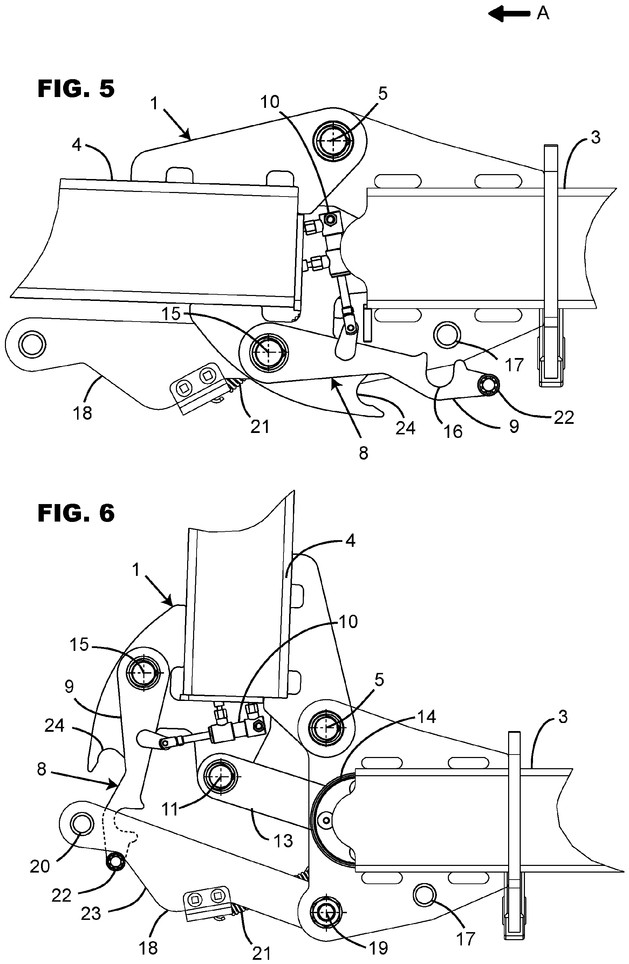

Sur la figure 5 est représentée la barre porte-outils (1) dans une position de travail dans laquelle le dispositif de verrouillage (8) est déverrouillé. Pour obtenir cette position, la grande chambre de l'actionneur (10) est alimentée et le fluide sous pression pousse le piston pour faire sortir la tige. Par conséquent, la tige transmet un effort pour étendre l'actionneur (10) et le verrou (9) pivote vers le bas autour de la troisième articulation (15). L'encoche (16) se dégage et s'éloigne de l'arrêt (17). A partir de cette position du verrou (9), il est possible de faire pivoter la poutre latérale (4) autour de la première articulation (5). Le verrou (9) possède deux positions : une position verrouillée et une position déverrouillée. Ces deux positions correspondent aux deux états de l'actionneur (10), tige rentrée ou tige sortie. On remarque que l'actionneur (10) agit directement sur le verrou (9) pour verrouiller la barre porte-outils (1) dans la position de travail.

La figure 6 représente la barre porte-outils (1) dans une position proche de celle repliée pour le transport. À partir de la position illustrée sur la figure 5, le vérin de manœuvre (6) est actionné pour faire sortir sa tige et déplacer le bras de liaison (13) en dehors de la poutre centrale (3). La roue de guidage (14) arrive pratiquement à la limite de la poutre centrale (3). Durant le relevage de la poutre latérale (4), l'actionneur (10) est maintenu dans sa position étendue. On remarque que le dispositif de verrouillage (8) comporte en sus, une bielle (18). Cette bielle (18) est liée à la poutre centrale (3) au moyen d'une quatrième articulation (19) d'axe horizontal. A son extrémité libre, la bielle (18) présente un arbre (20) qui est destinée à épouser la poutre latérale (4). La bielle (18) est également reliée à la poutre centrale (3) par l'intermédiaire d'un ressort (21). Le ressort (21) est accroché sensiblement au milieu de la bielle (18). Ce ressort (21) a pour fonction d'amorcer la rotation de la bielle (18) vers le haut lors du relevage de la poutre latérale (4). La bielle (18) n'a pas de fonction lorsque la barre porte-outils (1) se trouve dans la position de travail. Le ressort (21) maintient la bielle (18), tel que représenté sur les figures 4 et 5, dans une position sensiblement horizontale sous la poutre latérale (4). L'axe de la quatrième articulation (19) et l'axe de la troisième articulation (15) sont parallèles à l'axe de la première articulation (5). La quatrième articulation (19) est décalée latéralement par rapport à la troisième articulation (15). On remarque également que la quatrième articulation (19) et la troisième articulation (15) sont décalées latéralement par rapport à première articulation (5).

La figure 7 représente une position de transport avant le verrouillage de la poutre latérale (4). La poutre latérale (4) a pivoté d'environ 90° autour de la première articulation (5) pour arriver à la position de transport, dans laquelle elle est sensiblement verticale. Durant la dernière phase du pivotement, le verrou (9) contraint la bielle (18) à pivoter vers le haut autour de la quatrième articulation (19). Dans la réalisation représentée, le verrou (9) présente, à l'extrémité opposée de la troisième articulation (15), un galet (22) destiné à circuler sur la tranche de la bielle (18). Le galet (22) favorise le contact du verrou (9) sur la bielle (18) pour diminuer le frottement et l'usure. La bielle (18) possède, à cet effet, une surface de roulement (23). Pour pouvoir utiliser la course disponible de l'actionneur (10), la surface de roulement (23) est avantageusement orientée. Dans l'exemple représenté, la bielle (18) présente une saillie c'est à dire une partie qui dépasse par rapport à sa base. Grâce au déplacement du galet (22) sur la surface de roulement (23), la bielle (18) est guidée vers sa position de verrouillage.

La figure 8 illustre une partie de la barre porte-outils (1) représenté sur la figure 3. Il s'agit de la position de transport avec le dispositif de verrouillage (8) verrouillé. Le dispositif de verrouillage (8) permet d'immobiliser la poutre latérale (4) dans sa position repliée de transport. A partir de l'état représenté à la figure 7, l'opérateur commande l'actionneur (10) pour rentrer la tige dans le corps en alimentant la petite chambre et faire pivoter le verrou (9) autour de la troisième articulation (15). Durant ce pivotement, la bielle (18) est également amenée à pivoter vers le haut puisque le galet (22) roule sur la surface de roulement (23) de la bielle (18). Lorsque l'actionneur (10) arrive en fin de course, le verrou (9) bloque la bielle (18) en appui contre la butée (24) et la poutre latérale (4) est immobilisée. L'arbre (20) épouse la butée (24). L'actionneur (10) agit indirectement sur le verrou (9) pour verrouiller la barre porte-outils (1) dans la position de transport. Pour le verrouillage en position de transport, l'actionneur (10) commande le verrou (9) qui agit sur la bielle (18) pour bloquer l'arbre (20) dans la butée (24).

Selon la figure 2, le verrou (9) et la bielle (18) sont avantageusement composés de pièces doubles, lesdites pièces sont reliées entre elles. Entre les deux parties du verrou (9) se trouve le support de la butée (24) appartenant à la poutre latérale (4). La bielle (18), pour sa part, ceinture au moins partiellement le verrou (9). La bielle (18) entoure le verrou (9) dans la position de transport du dispositif de verrouillage (8). On remarque que les quatrièmes articulations (19) s'étendent de part et d'autre de la troisième articulation (15).

Le passage de la position de transport, représentée à la figure 8, vers la position de travail, représentée à la figure 4, se fait, selon les différentes étapes décrites précédemment, en commençant par le déverrouillage du verrou (9), la rétraction du vérin de manœuvre (6) pour arriver dans la position de travail puis au verrouillage avec le verrou (9).

D'une manière particulièrement avantageuse lorsque la barre porte-outils (1) est équipée d'outils (7) de semis, la poutre centrale (3) supporte un réservoir (25) qui contient de la semence. Les différents outils (7) sont alimentés à partir du réservoir (25) au moyen de tuyaux (non représentés). Grâce au dispositif de verrouillage (8) selon l'invention, il est possible de prévoir un réservoir (25) de grande capacité, tel que représenté sur la figure 3. Le réservoir (25) est placé entre les deux poutres latérales (4) relevées à la verticale.

Pour réduire les risques de bourrage, lorsque l'écartement entre les outils (7) est réduit, il est courant de répartir les outils (7) sur au moins deux barres porte-outils (1). Ces barres porte-outils (1) sont alors placées l'une derrière l'autre, compte tenu de la direction d'avance (A). De cette manière l'écartement entre les outils (7) peut être respecté.

La barre porte-outils (1) selon l'invention peut être directement accouplée à l'arrière d'un tracteur ou alors être montée sur le bâti d'une machine agricole.

Selon une alternative non représentée, le vérin de manœuvre (6) s'étend à l'extérieur de la poutre centrale (3). Il peut être fixé au-dessus ou en dessous de la poutre centrale (3).

Dans un exemple de réalisation non représenté, la poutre latérale (4) est liée à la poutre centrale (3) au moyen d'une première articulation (5) d'axe sensiblement vertical. Le vérin de manœuvre (6) réalise alors un repliage de la poutre latérale (4) vers l'arrière ou vers l'avant.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Barre porte-outils (1), pouvant être attelé à un tracteur, comportant une poutre centrale (3) disposée sensiblement perpendiculairement à la direction d'avance (A) et au moins une poutre latérale (4) s'étendant dans le prolongement de la poutre centrale (3) au travail, la poutre latérale (4) étant liée à la poutre centrale (3) au moyen d'une première articulation (5), la barre porte-outils (1) comportant un vérin de manœuvre (6) et un dispositif de verrouillage (8), le vérin de manœuvre (6) permettant de passer la poutre latérale (4) d'une position de travail vers une position de transport et inversement, le dispositif de verrouillage (8) comportant un verrou (9) et un actionneur (10), la poutre latérale (4) étant verrouillée au travail et au transport au moyen du dispositif de verrouillage (8), ***caractérisée en ce que*** l'actionneur (10) s'étend dans le volume de la barre porte-outils (1), entre la poutre centrale (3) et la poutre latérale (4).

2. Barre porte-outils selon la revendication 1, ***caractérisée en ce que*** le dispositif de verrouillage (8) est proche de la première articulation (5).

3. Barre porte-outils selon la revendication 1 ou 2, ***caractérisée en ce que*** le verrou (9) est solidaire de la poutre latérale (4).

4. Barre porte-outils selon l'une quelconque des revendications 1 à 3, ***caractérisée en ce que*** l'actionneur (10) est lié d'une part au verrou (9) et d'autre part à la poutre latérale (4).

5. Barre porte-outils selon l'une quelconque des revendications 1 à 4, ***caractérisée en ce que*** l'actionneur (10) agit directement sur le verrou (9) pour verrouiller la barre porte-outils (1) dans la position de travail.

6. Barre porte-outils selon l'une quelconque des revendications 1 à 5, **caractérisée en ce que** le dispositif de verrouillage (8) comporte, en sus, une bielle (18) liée à la poutre centrale (3).

7. Barre porte-outils selon la revendication 6, **caractérisée en ce que** la bielle (18) ceinture au moins partiellement le verrou (9).

8. Barre porte-outils selon l'une quelconque des revendications 1 à 7, **caractérisée en ce que** la bielle (18) réalise le verrouillage en position de transport en combinaison avec le verrou (9).

9. Barre porte-outils selon l'une quelconque des revendications 1 à 8, **caractérisée en ce que** le vérin de manœuvre (6) peut être actionné seulement si le dispositif de verrouillage (8) est libéré par l'actionneur (10).

10. Barre porte-outils selon l'une quelconque des revendications 1 à 9, **caractérisée en ce que** la poutre centrale (3) est creuse et le vérin de manœuvre (6) est logé dans la poutre centrale (3).

11. Barre porte-outils selon l'une quelconque des revendications 1 à 10, **caractérisée en ce que** la première articulation (5) présente un axe qui s'étend dans un plan sensiblement vertical parallèle à un axe vertical médian de la barre porte-outils (1).

12. Barre porte-outils selon l'une quelconque des revendications 1 à 11, **caractérisée en ce que** l'axe de la première articulation (5) est sensiblement horizontal et parallèle au sens d'avance (A), le vérin de manœuvre (6) permet un repliage vers le haut.

13. Barre porte-outils selon l'une quelconque des revendications 1 à 12, **caractérisée en ce qu'**elle comporte une poutre centrale (3) et deux poutres latérales (4) disposées de part et d'autre de la poutre centrale (3) au travail.

14. Machine agricole comportant au moins une barre porte-outil (1) selon l'une quelconque des revendications 1 à 13.

## Patentansprüche

1. Werkzeugtragbalken (1), der an einem Schlepper angekuppelt werden kann, mit einem zur Vorschubrichtung (A) im wesentlichen senkrecht angeordneten Mittelträger (3) und mindestens einem Seitenträger (4), der sich beim Betrieb in der Verlängerung des Mittelträgers (3) erstreckt, wobei der Seitenträger (4) mit dem Mittelträger (3) mittels eines ersten Gelenks (5) verbunden ist, wobei der Werkzeugtragbalken (1) ein Betätigungszylinder (6) und eine Verriegelungsvorrichtung (8) umfasst, wobei der Betätigungszylinder (6) den Übergang des Seitenträgers (4) aus einer Arbeitsposition in eine Transportposition, und umgekehrt, gestattet, wobei die Verriegelungsvorrichtung (8) eine Sperre (9) und ein Betätigungselement (10) umfasst, wobei der Seitenträger (4) beim Betrieb und beim Transport mittels der Verriegelungsvorrichtung (8) verriegelt ist, ***dadurch gekennzeichnet,* dass** sich das Betätigungselement (10) innerhalb des Volumens des Werkzeugtragbalkens (1), zwischen dem Mittelträger (3) und dem Seitenträger (4), erstreckt.

2. Werkzeugtragbalken nach Anspruch 1, ***dadurch gekennzeichnet,* dass** sich die Verriegelungsvorrichtung (3) in der Nähe des ersten Gelenks (5) befindet.

3. Werkzeugtragbalken nach Anspruch 1 oder 2, ***dadurch gekennzeichnet,* dass** die Sperre (9) fest mit dem Seitenträger (4) verbunden ist.

4. Werkzeugtragbalken nach irgend einem der Ansprüche 1 bis 3, ***dadurch gekennzeichnet,* dass** das Betätigungselement (10) einerseits mit der Sperre (9) und andererseits mit dem Seitenträger (4) verbunden ist.

5. Werkzeugtragbalken nach irgend einem der Ansprüche 1 bis 4, ***dadurch gekennzeichnet,* dass** das Betätigungselement (10) direkt auf die Sperre (9) einwirkt, um den Werkzeugtragbalken (1) in der Arbeitsposition zu verriegeln.

6. Werkzeugtragbalken nach irgend einem der Ansprüche 1 bis 5, ***dadurch gekennzeichnet,* dass** die Verriegelungsvorrichtung (8) zusätzlich eine mit dem Mittelträger (3) verbundene Stange (18) umfasst.

7. Werkzeugtragbalken nach Anspruch 6, *d**adurch gekennzeichnet,*** dass die Stange (18) die Sperre (9) mindestens teilweise umgibt.

8. Werkzeugtragbalken nach irgend einem der Ansprüche 1 bis 7, ***dadurch gekennzeichnet,* dass** die Stange (18) in Verbindung mit der Sperre (9) die Verriegelung in Transportstellung gewährleistet.

9. Werkzeugtragbalken nach irgend einem der Ansprüche 1 bis 8, ***dadurch** g**ekennzeichnet,*** dass der Betätigungszylinder (6) nur dann betätigt werden kann, wenn die Verriegelungsvorrichtung (8) durch das Betätigungselement (10) freigegeben wird.

10. Werkzeugtragbalken nach irgend einem der Ansprüche 1 bis 9, ***dadurch gekennzeichnet,* dass** der Mittelträger (3) hohl ist und der Betätigungszylinder (6) in dem Mittelträger (3) untergebracht ist.

11. Werkzeugtragbalken nach irgend einem der Ansprüche 1 bis 10, ***dadurch gekennzeichnet,* dass** das erste Gelenk (5) eine Achse aufweist, die sich in einer im wesentlichen vertikalen Ebene erstreckt, die parallel zu einer vertikalen Mittelachse des Werkzeugtragbalkens (1) verlauft.

12. Werkzeugtragbalken nach irgend einem der Ansprüche 1 bis 11, ***dadurch gekennzeichnet,* dass** die Achse des ersten Gelenks (5) im wesentlichen horizontal und parallel zur Vorschubrichtung (A) verlauft, der Betätigungszylinder (6) gestattet ein Hochzusammenklappen.

13. Werkzeugtragbalken nach irgend einem der Ansprüche 1 bis 12, ***dadurch gekennzeichnet,* dass** sie einen Mittelträger (3) und zwei Seitenträger (4) umfasst, die beim Betrieb beiderseits des Mittelträgers (3) angeordnet sind.

14. Landwirtschaftliche Maschine mit mindestens einem Werkzeugtragbalken (1) nach irgend einem der Ansprüche 1 bis 13.

## Claims

1. Toolbar (1) which can be hitched to a tractor, comprising a central beam (3) arranged substantially perpendicular to the direction of advance (A) and at least one side beam (4) extending in the continuation of the central beam (3) during work, the side beam (4) being linked to the central beam (3) by means of a first articulation (5), the toolbar (1) comprising an operating cylinder (6) and a locking device (8), the operating cylinder (6) making it possible to move the central beam (4) from a work position to a transport position and vice versa, the locking device (8) comprising a lock (9) and an actuator (10), the central beam (4) being locked during work and during transport by means of the locking device (8), ***characterized in that*** the actuator (10) extends within the volume of the toolbar (1), between the central beam (3) and the side beam (4).

2. Toolbar according to claim 1, ***characterized in that*** the locking device (8) is close to the first articulation (5).

3. Toolbar according to claim 1 or 2, ***characterized in that*** the lock (9) is rigidly fastened to the side beam (4).

4. Toolbar according to any one of claims 1 to 3, ***characterized in that*** the actuator (10) is connected on one hand to the lock (9) and on the other hand to the side beam (4).

5. Toolbar according to any one of claims 1 to 4, ***characterized in that*** the actuator (10) acts directly on the lock (9) for locking the toolbar (1) in the work position.

6. Toolbar according to any one of claims 1 to 5, ***characterized in that*** the locking device (8) additionally comprises a connecting-rod (18) connected to the central beam (3).

7. Toolbar according to claim 6, ***characterized in that*** the connecting-rod (18) at least partially surrounds the lock (9).

8. Toolbar according to any one of claims 1 to 7, ***characterized in that*** the connecting-rod (18) performs the locking in transport position in combination with the lock (9).

9. Toolbar according to any one of claims 1 to 8, ***characterized in that*** the operating cylinder (6) can be actuated only if the locking device (8) is released by the actuator (10).

10. Toolbar according to any one of claims 1 to 9, ***characterized in that*** the central beam (3) is hollow and the operating cylinder (6) is housed in the central beam (3).

11. Toolbar according to any one of claims 1 to 10, ***characterized in that*** the first articulation (5) has an axis extending in a substantially vertical plane, which is parallel to a vertical middle axis of the toolbar (1).

12. Toolbar according to any one of claims 1 to 11, ***characterized in that*** the axis of the first articulation (5) is substantially horizontal and parallel to the direction of advance (A), the operating cylinder (6) allows an upfolding.

13. Toolbar according to any one of claims 1 to 12, ***characterized in that*** it comprises a central beam (3) and two side beams (4) arranged on either side of the central beam (3) during work.

14. Agricultural machine comprising at least one toolbar (1) according to any one of claims 1 to 13.
